# EUROPEAN PATENT APPLICATION

(11) **EP 3 029 442 A1**
(43) Date of publication of application: **08.06.2016**
(21) Application number: 14195637.5
(22) Date of filing: 01.12.2014
(51) Int. Cl.: G01L 3/14, H02K 11/00

(54) **Electric bicycle motor**

(71) Applicant: Höganäs AB (publ), 263 83 Höganäs (SE)
(72) Inventor: Helander, Björn, 252 48 Helsingborg (SE); Pompermaier, Cristofaro, 254 38 Helsingborg (SE); Sjöberg, Lars, 26 261 Ängelholm (SE); Persson, Fredrik, 256 55 Helsingborg (SE)

(57) **Abstract**

An electric bicycle motor 100 comprises a static portion 110 for attachment to a frame of an electric bicycle and a rotary portion 120 adapted to provide rotary output to a wheel of the electric bicycle, the rotary portion having an axis of rotation. The motor further comprises a torque sensor 200 for measuring a secondary torque about the axis of rotation applied to the rotary portion. The torque sensor comprises a first part 220 attached to the rotary portion, and a second part 230 configured for receiving the secondary torque. The first part and the second part are rotationally coupled for torsional displacement with respect to each other about the axis of rotation against a return force provided by an elastic element. The first part and the second part form a magnetic circuit including a permanent magnet 222 causing a magnetic flux through the magnetic circuit, a flux measuring device 210 arranged to provide a sensor signal corresponding to the magnetic flux in the magnetic circuit, and a variable reluctance device 224, 243, 232. The variable reluctance device has at least one first tooth shaped magnetic path element 224 projecting from the first part and a cooperating second tooth shaped magnetic path element 232 projecting from the second part, wherein the first and second magnetic path elements are arranged opposing each other to form an air gap 243 and configured such that the reluctance for magnetic flux passed through the first magnetic path element across the air gap and through the second magnetic path element depends on the torsional displacement of the first part with respect to the second part.

## Description

The present invention relates in one aspect to an electric bicycle motor comprising a static portion for attachment to a frame of an electric bicycle, a rotary portion adapted to provide rotary output to a wheel of the electric bicycle, the rotary portion having an axis of rotation, and a torque sensor for measuring a secondary torque about the axis of rotation applied to the rotary portion. In a further aspect, the present invention relates to a drive assembly for an electric bicycle comprising a motor of the above-mentioned kind.

### BACKGROUND OF THE INVENTION

Electric bicycles are equipped with an electric motor providing primary mechanical power for assisting a rider in driving the bicycle forward. The bicycle may be of any kind and have e.g. two or more wheels, and may further be specially adapted for transporting cargo, passengers, and/or further riders in addition to the rider of the bicycle. Note that the term rider as used in the following also includes the case of a plurality of riders, e.g. when the bicycle is a tandem. Accordingly, a user of a wheel chair equipped with an electric motor for assisting the user in a manner analogue to an electric bicycle may also be considered as a rider. An electric bicycle (or equivalent electric power assisted vehicle) is distinguished from another electric motor driven vehicle in that it is equipped with a drive train through which the rider can provide secondary mechanical power for driving the bicycle forward, e.g. via a conventional bicycle drive train with pedals, chain and/or gears, and in that primary mechanical power is provided by the electric motor. Typically, the primary electrical power and the secondary mechanical power provided by the rider can be applied in combination to drive the bicycle forward. In many countries, current legislation requires that the primary mechanical power from the electric motor be applied only when the rider also provides secondary power by pedalling. Therefore electrical bicycles are typically equipped with a torque sensor for measuring the secondary torque applied to the drive train by the rider. When a secondary torque is detected by means of the torque sensor and associated read-out electronics, the electric motor is activated to output a primary torque in order to assist the rider. Typically, the primary torque contributed by the electric motor is varied depending on the amount of secondary torque applied by the rider. To that end, the torque sensor signal is typically input to a motor control unit, which then controls the electric motor to provide a rotary power output depending on the secondary torque applied by the rider, which is determined continuously. A torque sensor for an electric bicycle therefore also has to be suited for measuring an additional torque applied to a rotating element that is driven by a motor. The motor control unit may further take into account additional parameters when determining the rotary power output to be provided by the electric motor. Such additional parameters may include e.g. a pre-selected level of assistance, or a remaining battery power level.

In general, the secondary torque applied by the rider may be determined at any point in the drive train between the rider and the point where the primary torque and the secondary torque are combined. However, a remote placement of the torque sensor with respect to the electric motor is often tedious to produce when assembling an electric bicycle, may result in cable clutter which is exposed to the environment and therefore prone to breakage resulting in failure of the electric bicycle. An electric bicycle comprising a drive assembly with an electric motor that is mounted in the rear wheel is known from US 6,866,111. In this drive assembly, the secondary torque applied by the rider is determined by measuring the torsional deformation of the rear axle by means of strain gauges.

Besides the above-mentioned disadvantages, known solutions often suffer from issues related to unreliable or incomplete sensor signals, thus leading to an unsatisfactory control of the electric motor, Furthermore, some of the known solutions involve a tedious fabrication process, are very sensitive to production tolerances or are simply costly to produce.

### DEFINITIONS

In the rotary geometry, geometrical terms are defined as follows. Axial directions are parallel to the direction of the axis of rotation, radial directions are perpendicular to the axis of rotation, and circumferential directions are tangential to a circle about the axis of rotation, i.e. perpendicular to the axial directions and perpendicular to a radial direction at a finite radial distance from the axis of rotation. An angle between two circumferential directions is thus equal to the central angle between the corresponding radial directions. Planes, such as cross-sectional planes or planes of projection/elevation, are referred to by their orientation, i.e. an axial plane/cross-section is taken in a plane perpendicular to the axial direction, a radial plane/cross-section is taken in a plane perpendicular to the radial direction, and a circumferential plane/cross-section is taken in a plane perpendicular to the circumferential direction.

### SUMMARY OF THE INVENTION

One object of the present invention is to provide an electric motor in combination with a torque sensor for measuring an externally applied torque in addition to the rotary output of the electric motor, which overcomes the above-mentioned disadvantages of the prior art or at least provides an alternative. A further object of the present invention is to provide such an electric motor in combination with a torque sensor, which facilitates cost-effective assembly of an electric bicycle or a similar electric power assisted vehicle. Another object of the present invention is to provide a drive assembly comprising such an electric motor in combination with a torque sensor for use in an electric bicycle with at least some of the above-mentioned advantages. Yet another object of the present invention is to provide a drive assembly comprising such an electric motor in combination with a torque sensor for use in an equivalent electric power assisted vehicle with corresponding advantages.

According to one aspect, the object is achieved by an electric motor with an integrated torque sensor as disclosed in claim 1. Advantageous embodiments are disclosed in the dependent claims and the description below.

According to one embodiment an electric bicycle motor comprises a static portion for attachment to a frame of an electric bicycle, a rotary portion adapted to provide rotary output to a wheel of the electric bicycle, the rotary portion having an axis of rotation, the motor further comprising a torque sensor for measuring a secondary torque about the axis of rotation applied to the rotary portion, the torque sensor comprising a first part attached to the rotary portion, and a second part configured for receiving the secondary torque, wherein the first part and the second part are rotationally coupled for torsional displacement with respect to each other about the axis of rotation against a return force provided by an elastic element, wherein the first part and the second part form a magnetic circuit including a permanent magnet causing a magnetic flux through the magnetic circuit, a flux measuring device arranged to provide a sensor signal corresponding to the magnetic flux in the magnetic circuit, and a variable reluctance device, wherein the variable reluctance device has at least one first tooth shaped magnetic path element projecting from the first part and a cooperating second tooth shaped magnetic path element projecting from the second part, wherein the first and second magnetic path elements are arranged opposing each other to form an air gap and configured such that the reluctance for magnetic flux passed through the first magnetic path element across the air gap and through the second magnetic path element depends on the torsional displacement of the first part with respect to the second part.

The electric motor is for installation in an electric bicycle or equivalent electric power assisted vehicle, where the electric motor provides primary mechanical power to assist a rider that supplies secondary mechanical power. The secondary mechanical power is typically provided by pedalling and transmitted to the rotary portion via a chain or equivalent drive train, which in certain cases also may include a gear shifter. However, the electric motor may also be used in an equivalent manner to assist the user (i.e. the "rider") of a wheel chair, in which case the secondary mechanical power may e.g. provided and transmitted to the rotary portion by means of a hand rim attached concentrically to the wheels of the wheel chair. In the context of the present application, the term "electric bicycle" is therefore to be understood to include such equivalent electric power assisted vehicles, where primary mechanical power provided by an electric motor may be combined with secondary mechanical power provided by a rider.

The static portion of the electric motor includes a stator and is for attachment in fixed relation to the frame of the electric bicycle. The rotary portion includes a rotor and is configured for driving a wheel of the electric bicycle. For example, the rotary portion may form the hub of a driven wheel, whereas the static portion may be attached to an axle mount, e.g. the rear drop-out of a bicycle frame, wherein the respective wheel axle determines the axis of rotation.

The electric motor further comprises a torque sensor for measuring the torque applied externally to the rotary portion, in addition to the internal torque stemming from the conversion of electric energy into mechanical energy in the electric motor.

The internal torque provided by the electric motor is referred to as primary torque, whereas the externally applied torque provided by the rider is referred to as secondary torque. The torque sensor provides a sensor signal that is representative of the secondary torque that the rider applies to the rotary portion. The sensor signal may then be used by a motor control unit to control the power output of the electric motor and thus the primary torque applied to the rotary portion. Consequently, the primary torque generated by the electric motor may be controlled by means of the torque sensor signal in response to the secondary torque provided by the rider. Typically the primary torque is only activated when the rider provides secondary torque, e.g. by pedalling. Further typically, the level of primary torque generated by the electric motor increases with an increasing effort of the rider, wherein the effort is determined by the torque sensor signal.

By including the torque sensor in the electric motor so as to form one unit, installation of an electric drive system on a bicycle is made easier and the operation of the electric bicycle is more reliable, amongst others since less external wiring is required. This is an advantage both for retrofitting an electric drive, but also reduces production cost and reliability of operation for newly built electric bicycles.

Since the secondary torque is applied to the rotary portion in addition to the primary torque, the torque sensor has to be adapted for measuring torque while rotating. To avoid friction and wear between moving parts, the torque sensor is of a non-contact type, thereby improving reliability of the torque sensor in operation.

The torque sensor comprises a variable reluctance device with a reluctance that varies depending on the torque applied across the variable reluctance device. The variable reluctance device is formed by one or more tooth shaped first and second magnetic path elements that are arranged pairwise to form respective air gaps. First and second magnetic path elements act as pole pieces with respective first and second pole faces. The reluctance of the one or more air gaps depends on the alignment of the first and second magnetic path elements (teeth) with respect to each other. The first magnetic path elements are fixed to the first part of the torque sensor, and the second path elements are fixed to the second part of the torque sensor. Preferably, a plurality of cooperating first and second magnetic path element pairs are distributed on the first and second part, respectively, in a circumferential direction around the rotation axis. Preferably the first and second magnetic path element pairs are equally distributed in the circumferential direction. The first and second parts are rotatable with respect to each other about the axis of rotation, wherein any rotation works against the return force from the elastic coupling between the first and second part. Therefore, the alignment of the first and second magnetic path elements (teeth) with respect to each other depends on the torsional displacement, which in turn is a function of the torque applied to the first part about the axis of rotation against the elastic return force. Consequently, the reluctance of the variable reluctance device is a function of the secondary torque (from the rider) received by the second part of the torque sensor and transmitted via the elastic element of the rotational coupling to the rotary portion of the electric motor. Since the first part of the torque sensor is attached to the rotary portion, the variable reluctance depends on the torque applied through the torque sensor from the second part to the first part. Under operation, the second part receives the secondary torque applied by the rider, i.e. the additional torque detected by the torque sensor is the secondary torque.

The torque dependent reluctance of the variable reluctance device is probed by measuring the flux in a magnetic circuit comprising the variable reluctance device, a permanent magnet and typically further magnetic path elements for guiding the magnetic flux in a loop. The permanent magnet provides a magneto-motive force causing a permanent magnetic flux through the magnetic circuit. By providing a permanent magnet, the magnetic flux in the magnetic circuit is generated independent of any external power supply, and the torque sensor may easily be rotated along with the rotary portion of the electric motor to which it is attached without the need of any electric current leads/friction contacts. The permanent magnet further facilitates a compact design that is easier to integrate with the electric motor. The magnetic flux in the magnetic circuit depends on the reluctance in the magnetic circuit. Consequently, the magnetic flux through the magnetic circuit is a function of the secondary torque applied by the user. The magnetic flux is determined by a flux measuring device, including a transducer element which generates a signal proportional to or at least representative of the flux in the magnetic circuit. Furthermore, read-out electronics, such as amplification, filtering, temperature compensation, and analogue and/or digital signal processing may be provided to generate a corresponding sensor signal. The sensor signal obtained from the flux measuring device is representative of the secondary torque that is applied about the axis of rotation to the second part and further transferred from the second part via the elastic element to the first part.

Advantageously, the flux measuring device may comprise a plurality of transducers that are configured to allow for compensating or at least reducing the effect of electro-magnetic interference e.g. from the motor, and/or mechanical misalignment in the torque sensor.

According to some embodiments of the electric motor, a magnetic flux across the air gap of the variable reluctance device is oriented in a radial direction perpendicular to the rotation axis. Thereby, a torque sensor which is particularly compact in the axial direction may be provided. This is particularly useful when the axial dimensions of an electric motor are determined by constructional constraints, such as the width of the span between the drop-outs on the rear part of the frame.

According to some embodiments of the electric motor, a magnetic flux across the air gap of the variable reluctance device is oriented in an axial direction parallel to the rotation axis. This embodiment allows for axially longer, but radially smaller dimensions of the torque sensor. This configuration may be useful, for example, in embodiments of the electric motor where the torque sensor is to be integrated in the centre portion of the electric motor as seen in a radial direction, but may stretch into the electric motor in an axial direction.

Further according to some embodiments of the electric motor, a position of the first part with respect to the second part in the absence of an applied torque defines a fiducial position of the torque sensor. An externally applied torque (secondary torque) then causes a torsional displacement from the fiducial position against a return force provided by an elastic element. When the secondary torque is removed, the first and second parts return to the fiducial position. Advantageously, the flux measuring device may be calibrated to provide a zero signal when the torque sensor is in the fiducial position.

Further according to some embodiments of the electric motor, the reluctance of the variable reluctance device in the fiducial position is a minimum. Thereby a maximum range for the variation of the flux in the magnetic circuit upon torsional displacement of the first part with respect to the second part is achieved, thereby improving the signal to noise ratio of the sensor signal provided by the flux measuring device.

Further according to some embodiments, the reluctance in the fiducial position is larger than a minimum, such as in between a minimum and a maximum value of the reluctance upon torsional displacement of the first part with respect to the second part, such as midways between the maximum and the minimum, such as at an inflection point of a reluctance curve as a function of the torsional displacement, wherein the reluctance of the variable reluctance device increases for torsional displacement in one direction away from the fiducial position and wherein the reluctance of the variable reluctance device decreases for torsional displacement in the opposite direction away from the fiducial position. Thereby, a direction of the torsional displacement can be distinguished. This is useful in order to detect if the rider pedals forward or backward, and the primary torque provided by the electric motor may be controlled accordingly.

Further according to some embodiments of the electric motor, the second part has a fiducial position in the absence of secondary torque, which is offset with respect to the minimum reluctance position, such that the reluctance as a function of the displacement angle has a finite slope larger than zero.

Thereby an improved control signal with a finite slope of the reluctance as a function of displacement angle is achieved. Advantageously, a secondary torque that is applied in a "forward" direction is measured for displacement angles that increase starting from the fiducial position at the lower limit and up to the upper limit of the useful displacement angle range.

The reluctance of the variable reluctance device is a minimum when the first and second magnetic path elements are fully aligned with each other, i.e. when the angular alignment overlap of the first magnetic path elements with the second magnetic path elements is a maximum. The reluctance increases as the alignment overlap decreases as a function of the angle of torsional displacement with respect to the minimum reluctance position, until a maximum in reluctance is reached when the first magnetic path elements are half way in between two circumferentially adjacent magnetic path elements. When further increasing the torsional displacement, the reluctance decreases again. The reluctance is thus a periodic function of the displacement angle. For an embodiment with a given number of pairs of first and second magnetic path elements distributed equally around the axis of rotation in a circumferential direction, the reluctance is a periodic function of the displacement angle with a period of 360 degrees divided by the number of pairs. A typical range of angles useful for control signal measurements corresponds to about a quarter period centred between maximum and minimum of the reluctance, with the fiducial point at one end of the angular range, wherein the angular range is e.g. centred about an inflection point, where the slope of the variable reluctance as a function of the displacement angle is a maximum. For example, the reluctance may be a sinusoidal function of the displacement angle, where the angular displacement between minimum and maximum reluctance positions is half a period, while the inflection point is half way in between.

The slope of the reluctance as a function of displacement angle is zero at the minimum and maximum reluctance positions. Between the minimum and maximum reluctance positons, the slope has a maximum at an inflection point of the reluctance as a function of displacement angle. Advantageously, the magnetic circuit is therefore arranged such that the second part has a fiducial position in the absence of secondary torque, which is slightly offset with respect to the minimum reluctance position, such that the reluctance as a function of the displacement angle has a finite slope larger than zero. Consequently, the useful displacement angle range is less than the angular displacement between the minimum and maximum reluctance positions.

A typical angular displacement offset of the fiducial position may be in the range between 15-35%, between 20-30%, or preferably about 25% of the angular displacement between the minimum and maximum reluctance positions. A typical useful displacement angle range for such fiducial positions may be in the range between 30-70%, between 40-60%, or about 50% of the angular displacement between the minimum and maximum reluctance positions, wherein a secondary torque that is applied in a "forward" direction is measured for displacement angles that increase starting from the fiducial position at the lower limit and up to the upper limit of the useful displacement angle range.

Further according to some embodiments of the electric motor, the flux measuring device comprises a Hall probe. Under operation of the electric motor, the first and second parts rotate about the axis of rotation. Preferably, the flux measuring device including a flux probe is fixed with respect to the static portion, i.e. the first and second parts rotate with respect to the flux measuring device. The flux measuring device comprises a flux probe, such as a Hall probe. The flux probe picks up the magnetic flux in a circumferential air gap configured for flux probing, which is provided in the magnetic circuit of the torque sensor concentric with the rotation axis and preferably separate from the air gap of the variable reluctance device. According to some embodiments, the flux probing air gap is formed between the first part and the second part. The flux measuring device typically further comprises read-out electronics for processing a signal received from the flux probe (e.g. a Hall probe). Advantageously, the read-out electronics and the flux probe are arranged on a common PCB thereby providing a compact design, where small signals do not have to be transmitted over long distances in an electromagnetically noisy environment. Further according to some embodiments of a torque sensor, the flux measuring device comprises further flux probes distributed along the circumferential air-gap.

Further according to some embodiments of the electric motor, the flux measuring device comprises at least one further Hall probe. Advantageously, the flux measuring device may thus comprise a plurality of flux probing transducers that are configured to allow for compensating or at least reducing the effects of electro-magnetic interference e.g. from the electric motor itself, and/or the effects of mechanical misalignment in the torque sensor. The plurality of flux probing transducers, such as Hall probes, are preferably also fixed with respect to the static portion and distributed along the above-mentioned circumferential air-gap. Preferential positions of the transducers are chosen to minimize electromagnetic interference from the electric motor when integrating the torque sensor in the same housing and/or to compensate for eccentricity of the circumferential gap with respect to the axis of rotation and/or to compensate for a varying width of the circumferential air gap for flux probing, e.g. due to misalignment of first and second parts with respect to each other.

Advantageously, the first and second magnetic path elements are made of a soft magnetic material. Magnetically "soft" refers to materials like annealed iron, which can be magnetized but do not tend to stay magnetized, i.e. materials having low coercivity. The soft magnetic material may e.g. be laminated sheet metal as commonly used for forming magnetic cores in electromagnets or electrical machines. However, in order to produce the torque sensor from parts having a higher complexity of the shape, the components of the variable reluctance device according to the present invention are preferably made of a soft magnetic material that can be shaped by a moulding technique.

Further according to some embodiments of an electric motor, the first and second magnetic path elements are made of a soft magnetic composite (SMC). Using a soft magnetic composite material has the advantage that complex shapes of magnetic path elements may be produced at a high throughput using moulding techniques, such as compression moulding followed by stress relieving heat treatment. In contrast to sintering such stress relieving heat treatment is performed under conditions which will not destroy the electrically insulating coating of the soft magnetic composite particles. An advantageous example of a mouldable SMC is Somaloy available from Höganäs AB, 263 83 Höganäs, Sweden.

Further according to some embodiments, magnetic path elements for the torque sensor are formed by a compression moulding and stress relieving heat treatment process, e.g. using a straight draw mould allowing for a high pressure compaction in an SMC powder metallurgical process.

According to a further aspect of the invention, a drive assembly for an electric bicycle is provided, the drive assembly comprising a motor according to any of the preceding claims. Preferably, the drive assembly has flanges, attachment means, and/or interfaces facilitating the easy mounting of the drive assembly in an electric bicycle. Thereby production cost is saved. For example, the drive assembly may be formed as a hub portion of a rear wheel with standard dimensions and attachment elements compatible with standard frame designs, as well as electrical interface connectors for connecting the drive assembly to battery power and/or control devices, such as a motor control unit.

Further according to some embodiments, a drive assembly further comprises a motor control unit adapted for controlling the operation of the electric motor depending on the sensor signal provided by the torque sensor. As already detailed above, the torque sensor signal is representative of the secondary torque input from the rider. The drive assembly is thus adapted to control the operation of the electric motor as a function of the secondary mechanical power provided by the rider. For example, the primary mechanical power output by the electric motor may be controlled to be proportional to the secondary mechanical power input from the rider as determined by the torque sensor signal. Furthermore, providing a drive assembly comprising an electric motor with a torque sensor in combination with a motor control unit allows for calibrating and setting up the control electronics for the particular sensor and motor combination independent of its installation in an electric bicycle. The drive assembly may then be provided as a ready-for-use module, which may be installed without further hassle. This furthermore makes it easier to provide the drive assembly as a retro-fit unit.

Further according to some embodiments of a drive assembly, the motor is switched on / activated when the sensor signal exceeds a threshold. Thereby a control function is achieved allowing to control and stop the primary mechanical power output by pedalling. The threshold avoids inadvertent activation of the electric motor, e.g. due to false activation signals stemming from noise or artefacts in the sensor signals. The threshold may be a value that is predetermined, e.g. pre-programmed into the control electronics or pre-selected, such as user selected. Advantageously, the control electronics may comprise a hysteresis avoiding spontaneous on-off switching, e.g. due to noise or artefacts in the sensor signals, or when the rider only contributes with a secondary torque at a level close to a switching threshold.

Further according to some embodiments, a drive assembly further comprises a freewheel unit. Preferably, the free-wheel unit is attached to the second part of the torque sensor to ensure a unidirectional application of the secondary torque. The free-wheel unit acts as a one-way clutch only transmitting secondary torque to the torque sensor that is applied in a forward direction. Thereby it is ensured that only secondary torque applied in a forward direction is transferred to and detected by the torque sensor. When the secondary torque applied by the user is used as a control signal for controlling the forward driving power of the motor, only a forward driving secondary torque is a valid control signal. Arranging the free wheel in this manner allows for using a torque sensor providing only a direction independent signal.

Further according to some embodiments of a drive assembly, the electric motor further comprises a position sensor for detecting a relative position of the rotary portion with respect to the static portion. The signal may be provided to the motor control unit and used e.g. for controlling the operation of the electric motor or values derived from the position sensor signal may be displayed, e.g. to the rider. The trigger signal may even be superimposed, e.g. as an easily identifiable pulse shape, on the sensor signal provided by the flux measuring device.

Further according to some embodiments of a drive assembly, the torque sensor is adapted to provide a trigger signal for at least each revolution of the rotary output with respect to the static portion, around the axis of rotation. Advantageously, the trigger signal may be provided to the motor control unit. In some embodiments, the trigger signal may be generated by a flux element that is attached to the parts of the torque sensor rotating along with the rotary portion of the electric motor and induces as it passes by a flux probe of the flux measuring devices that is fixed with respect to the static portion of the electrical motor.

Further according to some embodiments of a drive assembly, the motor control unit determines an absolute position of the rotary portion with respect to the static portion on the basis of the trigger signal from the torque sensor in combination with the relative position as determined by the position sensor. Thereby a high resolution absolute position information is provided in a simple manner even though using a position sensor only providing a relative position signal. Thereby the synergy of using both a rotating torque sensor and a relative position sensor may be exploited to provide an improved position signal.

### BRIEF DESCRIPTION OF THE DRAWINGS

Preferred embodiments of the invention will be described in more detail in connection with the appended drawings, which show in
- Fig. 1: a perspective view of a drive assembly according to one embodiment,
- Fig. 2: a cross-sectional detail of the drive assembly of Fig. 1,
- Fig. 3: a perspective view of a magnetic circuit of a torque sensor according to one embodiment,
- Fig. 4: a cross-sectional side view of the magnetic circuit of Fig. 3, and in
- Fig. 5: a flux measuring device according to one embodiment.

### DETAILED DESCRIPTION OF PREFERRED EMBODIMENTS

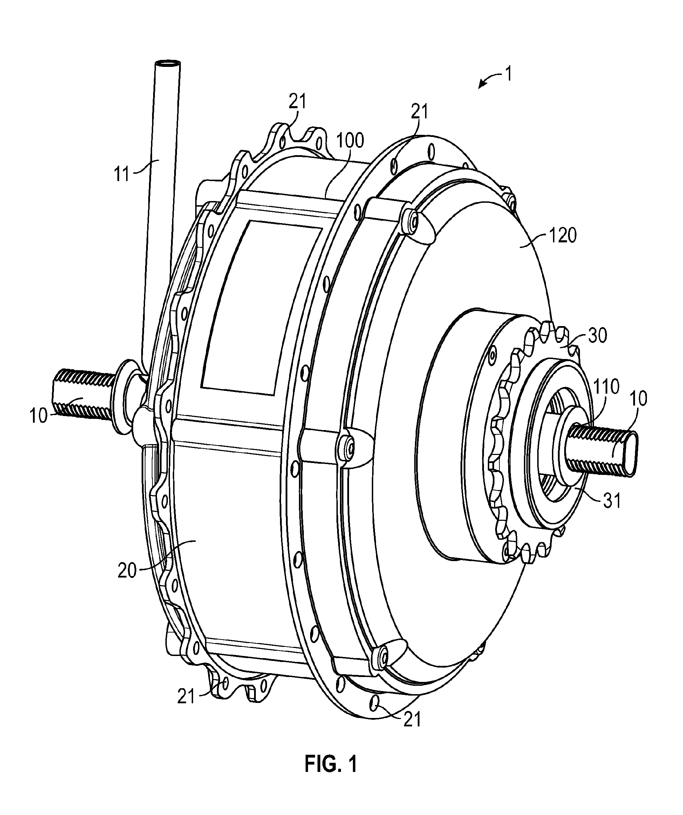

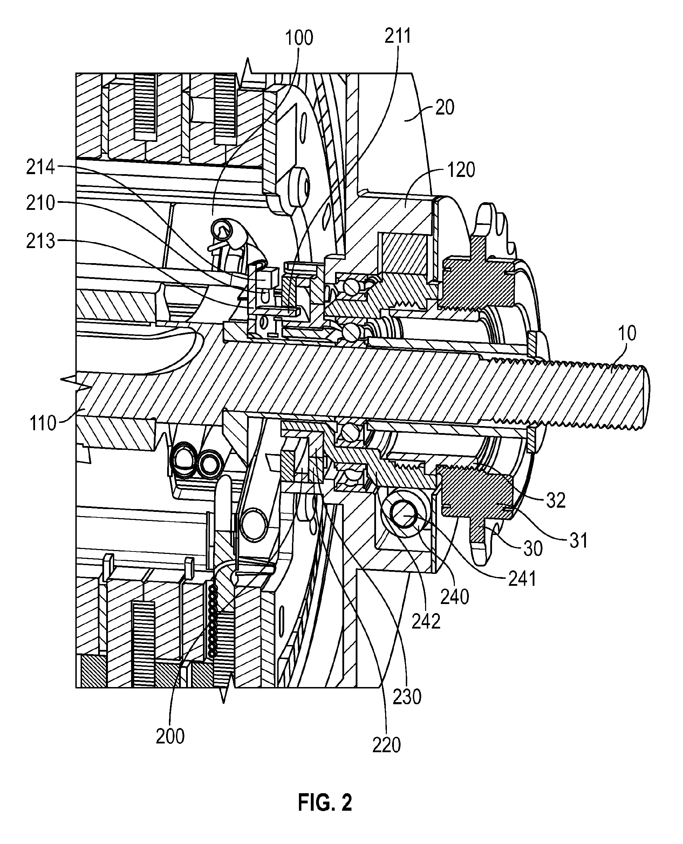

Fig.1 shows a drive assembly 1 for use in the rear wheel of an electric bicycle and Fig.2 shows a cross-sectional detail of the drive assembly 1. The cross-section of Fig.2 is taken in a plane comprising the axis of rotation defined by a rear axle 10. Axial directions are parallel to the axis of rotation. The drive assembly 1 comprises an electric motor 100 with a static portion 110 and a rotary portion 120. The static portion 110 includes the axle 10, which has flanges and a thread for mounting the rear axle in a fixed relation to an axle mount (not shown), such as the drop-out of a bicycle frame. The static portion further comprises an electric interface 11, which may include power cables for supplying the electric motor 100 with electric power from a battery pack (not shown), and signal cables for communicating with a motor control unit (not shown). The rotary portion 120 has a housing 20, which is formed as a hub for a wheel and comprises eyelets 21 for mounting the drive assembly 1 in a drive wheel by means of spokes. The rotary portion 120 is configured for receiving secondary mechanical power via a sprocket 30 coupled to the rotary portion via a freewheel unit 31 and a rotary elastic coupling. The freewheel unit 31 ensures that only secondary mechanical power that is applied to the sprocket 30 in one direction about the axis of rotation is transferred to the rotary portion 120. The electric motor 100 further comprises a torque sensor 200.

The torque sensor 200 is integrated in the electric motor 100 as best seen in Fig.2. The torque sensor 200 has a flux measuring device 210, which is mounted in fixed relation with the static portion 110, a first part 220, which is attached in fixed relation to the rotary portion 120, and a second part 230, which is rotationally coupled to the first part 220 via an elastic coupling. The elastic coupling allows for torsional displacement of the first part 220 and the second part 230 with respect to each other about the axis of rotation against a return force provided by an elastic element 240, here a set of tangentially acting helical compression springs. One end of the elastic element 240 acts against an abutment on the rotary portion 120 and the other end of the elastic element 240 acts against an abutment on an inner bushing 242. The bushing 242 is supported by ball-bearings for rotation about the rotation axis. When secondary mechanical power is received by the sprocket 30 it causes a secondary torque applied to the second part 230 of the torque sensor 200 via freewheel unit 31, outer bushing 32, and inner bushing 242. The secondary torque causes a torsional displacement of the second part 230 with respect to the first part 220 against the return force of the elastic element 240. A mechanical limit stop 241 limits the torsional displacement of the second part 230 with respect to the first part 220.

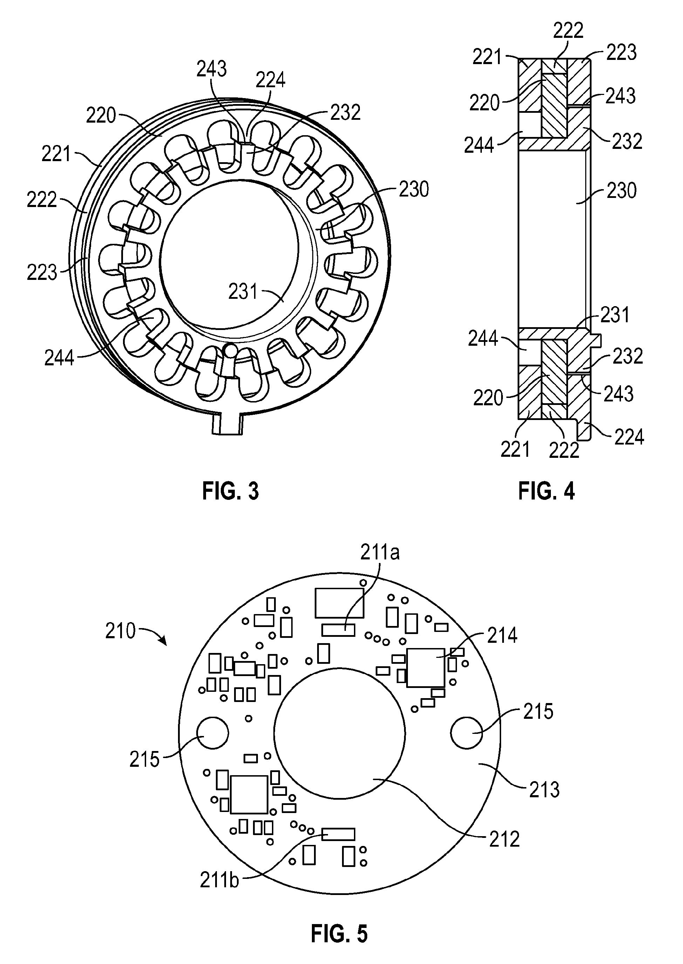

The flux measuring device 210 comprises a flux probe 211, projecting in the axial direction from a printed circuit board (PCB) 213, which is attached to the static portion. The flux probe 211 projects into a circumferential measuring air gap 244 formed between the concentrically aligned first part 220 and second part 230 of the torque sensor 200 (see also Fig.3 and Fig.4). Since the flux probe 211 is attached to the static portion 110, whereas the first and second part are mounted to rotate along with the rotary portion 120, the flux probe 211 travels in operation in a circumferential direction along the measuring air gap 244.

The measuring air gap 244 is part of a magnetic circuit formed by the first and second parts 220, 230 of the torque sensor 200. The magnetic circuit of the torque sensor 200 is shown in a perspective view on Fig.3 and in a side cross-sectional view on Fig.4. The cross-section of Fig.4 is taken in a plane comprising the axis of rotation.

The first part 220 comprises an annular magnetic path element forming a rear part 221 of the first part 220 and an annular magnetic path element forming a front part 223. Sandwiched between the rear part 221 and the front part 223, the first part 220 carries an annular permanent magnet 222 with an N-S magnetic polarization pointing from the rear part to the front part or vice versa. In the embodiment of Figs.2-4, the magnetic polarization of the permanent magnet points in the axial direction. Generally, the permanent magnet 222 may be provided in a single piece or in segments. The first part 220 has a circular central opening extending in the axial direction, which is configured for receiving the second part 230 therein. The first part 220 and the second part 230 have rotational symmetry and are concentrically aligned with their respective symmetry axes pointing in the axial direction and coinciding with the axis of rotation of the electric motor 100. The front part 223 of the first part 220 carries tooth shaped first magnetic path elements 224 projecting radially inward.

The second part 230 has a circular central opening extending in the axial direction in concentric axial alignment with the first part 220 and the axis of rotation of the electrical motor 200. The inner face of the central opening of the second part 230 is configured as a flange part 231. At a front end, the second part 230 has tooth shaped second magnetic path elements 232 projecting radially outward towards the first magnetic path elements 224.

Multiple first and second magnetic path elements are distributed around the circumference of the first and second parts 220, 230, respectively, and are pairwise aligned with each other. Between each pair of the first magnetic path elements 224 and the second magnetic path elements 232 a respective air gap 243 is formed, wherein the reluctance for magnetic flux passing from the first magnetic path elements 224 via the air gap 243 to the second magnetic path elements 232 varies with the overlap, and thus with the mutual alignment of the first and second magnetic path elements 224, 232 with respect to each other.

The second part 230 is configured to receive secondary torque at flange part 231 from the sprocket 30 via outer and inner bushings 32, 242 as described above. Furthermore, the first and second parts 220 230 are coupled elastically for torsional displacement around the axis of rotation as described above. The mutual alignment of the first and second magnetic path elements 224, 232 varies with the torsional displacement of the first part 220 with respect to the second part 230 depending on the secondary torque applied against the return force of the elastic coupling between the first and second parts 220, 230. Therefore, the first and second magnetic path elements 224, 232 and the respective air gaps 243 form a variable reluctance device 224, 243, 232 where the reluctance is a measure of the secondary torque transmitted through the torque sensor 200.

In the embodiment shown in Fig.3, the first part 220 has eighteen first magnetic path elements 224 pointing radially inward and the second part 230 has eighteen corresponding second magnetic path elements 232 pointing radially outward. The reluctance of the variable reluctance device 224, 243, 232 is a minimum when the first and second magnetic path elements are fully aligned with each other, i.e. when the angular alignment overlap of the first magnetic path elements 232 with the second magnetic path elements 232 is a maximum. The reluctance increases as the alignment overlap decreases as a function of the angle of torsional displacement with respect to the minimum reluctance position until a maximum in reluctance is reached when the first magnetic path elements 224 are half way in between two circumferentially adjacent magnetic path elements 232, i.e. here at a displacement angle of 10 degrees with respect to the minimum reluctance position. When further increasing the torsional displacement, the reluctance decreases again. The reluctance is thus a periodic function of the displacement angle, here with a sinusoidal shape and a period of 20 degrees. The slope of the reluctance as a function of displacement angle is zero at the minimum and maximum reluctance positions. Between the minimum and maximum reluctance positons, the slope has a maximum at an inflection point of the reluctance as a function of displacement angle. Advantageously, the magnetic circuit is arranged such that the second part 230 has a fiducial position in the absence of secondary torque, which is slightly offset with respect to the minimum reluctance position, as shown in Fig. 3. The angular displacement offset of the fiducial position may be in the range between 1.5-3.5 degrees, between 2-3 degrees, or preferably about 2.5 degrees. A typical useful displacement angle range for such fiducial positions may be in the range between 3-7 degrees, between 4-6 degrees, or about 5 degrees, wherein a secondary torque that is applied in a "forward" direction is measured for displacement angles that increase starting from the fiducial position at the lower limit and up to the upper limit of the useful displacement angle range.

The reluctance of the variable reluctance device 224, 243, 232 may be determined by probing the magnetic flux in a magnetic circuit comprising the variable reluctance device 224, 243, 232. The permanent magnet 222 is adapted to cause a magnetic flux passing from one pole of the permanent magnet 222 via the front part 223, the variable reluctance device 224, 243, 232, further path elements of the second part 230, the measuring air gap 244, and the rear part 221 to the opposite pole of the permanent magnet 222. The magnetic flux is probed by the flux measuring device 210 with the flux probe 211 projecting from the PCB 213 into the measuring air gap 244 as described above.

Fig.5 shows schematically an embodiment of a flux measuring device 210 with a PCB 213 carrying two flux probes 211 a, 211 b and signal processing electronics 214. The PCB 213 has a central opening 212 for passing an axle and mounting holes 215 for attaching the PCB 213 to the static portion of the electric motor in an axially oriented position. The central opening 212 is intended for concentric alignment with the axis of rotation of the electric motor 100. The flux probes 211a/b project in an axial direction from the PCB 213. A first flux probe 211 a is arranged at a first circumferential position with respect to the axis of rotation, and a second flux probe 211 b is arranged at a second circumferential position with respect to the axis of rotation at a location that allows for detecting and/or compensating eccentricity or other misalignments, for example diametrically opposite to the first probe 211 a with respect to the axis of rotation as shown in Fig.5.

### List of reference numerals

- 1: drive assembly
- 10: axle
- 11: electrical interface
- 20: housing
- 21: spoke eyelet
- 30: sprocket
- 31: free wheel unit
- 32: bushing
- 100: electric motor
- 110: static portion
- 120: rotary portion
- 200: torque sensor
- 210: flux measuring device
- 211, 211a, 211b: flux probe
- 212: centre aperture
- 213: printed circuit board (PCB)
- 214: processing electronics
- 215: fixation aperture
- 220: first part (of the torque sensor)
- 221: rear part
- 222: permanent magnet
- 223: front part
- 224: first magnetic path element
- 230: second part (of the torque sensor)
- 231: flange part
- 232: second magnetic path element
- 240: elastic element
- 241: limiting stop
- 242: bushing
- 243: air gap (of the variable reluctance device)
- 244: air gap (for measuring flux)

## Claims

1. Electric bicycle motor (100) comprising a static portion (110) for attachment to a frame of an electric bicycle, a rotary portion (120) adapted to provide rotary output to a wheel of the electric bicycle, the rotary portion having an axis of rotation,
the motor further comprising a torque sensor (200) for measuring a secondary torque about the axis of rotation applied to the rotary portion, the torque sensor comprising a first part (220) attached to the rotary portion, and a second part (230) configured for receiving the secondary torque, wherein the first part and the second part are rotationally coupled for torsional displacement with respect to each other about the axis of rotation against a return force provided by an elastic element (240), wherein the first part and the second part form a magnetic circuit including
- a permanent magnet (222) causing a magnetic flux through the magnetic circuit,
- a variable reluctance device (224, 243, 232), wherein the variable reluctance device has at least one first tooth shaped magnetic path element (224) projecting from the first part and a cooperating second tooth shaped magnetic path element (232) projecting from the second part, wherein the first and second magnetic path elements are arranged opposing each other to form an air gap (243) and are configured such that the reluctance for magnetic flux passed through the first magnetic path element across the air gap and through the second magnetic path element depends on the torsional displacement of the first part with respect to the second part, and
- a flux measuring device (210) arranged to provide a sensor signal corresponding to the magnetic flux in the magnetic circuit.

2. Electric motor according to claim 1, wherein a position of the first part with respect to the second part in the absence of an applied torque defines a fiducial position of the torque sensor.

3. Electric motor according to claim 2, wherein the second part has a fiducial position in the absence of secondary torque, which is offset with respect to the minimum reluctance position, such that the reluctance as a function of the displacement angle has a finite slope larger than zero.

4. Electric motor according to any of the preceding claims, wherein the flux measuring device comprises a Hall probe.

5. Electric motor according to claim 4, wherein the flux measuring device comprises at least one further Hall probe.

6. Electric motor according to claim 5, wherein the first and second magnetic path elements are made of a soft magnetic composite.

7. Drive assembly (1) for an electric bicycle, the drive assembly comprising an electric motor (100) according to any of the preceding claims.

8. Drive assembly according to claim 7, further comprising a motor control unit adapted for controlling the operation of the motor depending on the sensor signal provided by the torque sensor.

9. Drive assembly according to any one of claims 7-8, wherein the motor is switched on / activated when the sensor signal exceeds a threshold.

10. Drive assembly according to any one of claims 7-9, wherein the drive assembly further comprises a free-wheel unit (31).

11. Drive assembly according to any one of claims 7-10, wherein the electric motor further comprises a position sensor for detecting a relative position of the rotary portion with respect to the static portion.

12. Drive assembly according to claim 11, wherein the torque sensor is adapted to provide a trigger signal for at least each revolution of the rotary portion with respect to the static portion.

13. Drive assembly according to claim 11, wherein the motor control unit determines an absolute position of the rotary portion with respect to the static portion on the basis of the trigger signal from the torque sensor in combination with the relative position as determined by the position sensor.
